Europäisches Patentamt

European Patent Office

Office européen des brevets

(11) Veröffentlichungsnummer: **0 208 912**
**B1**

(12) **EUROPÄISCHE PATENTSCHRIFT**

(45) Veröffentlichungstag der Patentschrift: 25.07.90

(21) Anmeldenummer: 86107970.5

(22) Anmeldetag: 11.06.86

(51) Int. Cl.⁵: **B 23 Q 16/00, B 23 Q 17/22**

(54) Vorrichtung zum Einstellen von in Maschinen angeordneten Werkzeugen.

(30) Priorität: 13.07.85 DE 3525037

(43) Veröffentlichungstag der Anmeldung:
21.01.87 Patentblatt 87/04

(45) Bekanntmachung des Hinweises auf die
Patenterteilung:
25.07.90 Patentblatt 90/30

(84) Benannte Vertragsstaaten:
DE FR GB IT SE

(56) Entgegenhaltungen:
DD-A- 212 208
DE-C- 459 436
DE-C- 905 810
GB-A-2 079 472
GB-A-2 108 079

(73) Patentinhaber: **AUDI AG**
**Auto-Union-Strasse 1 Postfach 220**
**D-8070 Ingolstadt (DE)**

(72) Erfinder: **Müller, Karl-Heinz**
**Schillerstrasse 66**
**D-8070 Ingolstadt (DE)**
Erfinder: **Riedl, Volker**
**St. Wendelinstrasse 5**
**D-8074 Gaimersheim (DE)**

(74) Vertreter: **Engelhardt, Harald**
**Audi AG Postfach 2 20**
**D-8070 Ingolstadt (DE)**

Courier Press, Leamington Spa, England.

**Beschreibung**

Die Erfindung bezieht sich auf eine Vorrichtung zum Einstellen von in Maschinen angeordneten Werkzeugen gemäß dem Oberbegriff des Anspruchs 1.

Bei vielen Werkzeugen ist es wichtig, daß sie genau im rechten Winkel auf das Werkstück aufgesetzt werden. Solche Werkzeuge sind beispielsweise Schweißelektroden von Punktschweißeinrichtungen (z.B. Schweißzange, Schweißzylinder), Bolzenschweißwerkzeuge oder aber auch Werkzeuge, mittels der auf das Werkstück in anderer Weise—etwa zur Durchführung einer Clinchverbindung—eingewirkt wird. Eine vom rechten Winkel abweichende Werkzeugstellung hätte je nach Werkzeug eine schlechtere Schweißqualität, einen schräg angeordneten Schweißbolzen oder einen erhöhten Kraftaufwand zur Folge.

Bei Vorrichtungen, in denen die oben genannten Werkzeuge starr montiert sind, kann ein größerer Aufwand beim Einstellen der Werkzeuge relativ zu einer Werkstückauflage in Kauf genommen werden, da diese Einstellung meist über die gesamte Lebensbauer der Vorrichtung beide halten wird.

Anders est dies jedoch, wenn die Werkzeuge in frei programmierbaren Einrichtung—z.B. Schweißrobotern—eingesetzt werden sollen. Besonders Merkmal dieser Einrichtungen ist, daß mit demselben Werkzeug nacheinander eine Vielzahl von Bearbeitungsstellen am Werkstück nach einem vorbestimmten Progammangefahren werden und dort stets eine Bearbeitungsoperation durchgeführt werden muß, wobei es wichtig ist, daß des Werkzeug an jeder Stelle genau im rechten Winkel in Anlage an das Werkstück gebracht wird.

Zur Erstellung des Programms für einen solchen Bewegungsablauf wird zunächst ein Lernprogramm durchgeführt, bei dem der das Werkzeug tragende Arm der Einrichtung so an das Werkstück herangeführt wird, daß das Werkzeug einen rechten Winkel zu diesem einnimmt. Die Kontrolle des rechten Winkels ist dabei sehr schwierig und zeitaufwendig, insbesondere wenn z.B. Schweißelektroden so ausgerichtet werdne sollen, daß sie auf einer stark gekrümmten Fläche im Berührungspunkt eine Normale auf der Tangentialfläche der Krümmung bilden.

Um dies sicherzustellen, in es in der Praxis bekannt, ein Einstellwerkzeug einzusetzen, welches an seinem Außenumfang drei oder mehr, gegen das Werkstück gerichtete Luftdüsen aufweist. Werden die Luftdüsen beaufschlagt, dann läßt sich über die Differenz der Innendrücke in den Düsen oder übergemessene Luftmengenwerte ein Rückschluß auf die Winkellage des Einstellwerkzeuges auf dem Werkstück ziehen, Das Werkzeug muß dann so in seiner Winkellag verändert werden, bis keine Differenzen zwischen den einzelnen Düsen mehr meßbar sind.

Abgesehen vom hohen Bauaufwand derartiger Einrichtungen besteht der Nachteil, daß die Düsen stets außerhalb der eigentlichen Anlagefläche für das Werkzeug messen müssen und deshalb Messungen an stark gekrümmten Fläche ungenau sind. Besonders störend ist bei derartigen Einstellwerkzeugen, daß sie sehr groß bauen. Da ihr Durchmesser wesentlichen größer ist als der des eigentlichen Werkzeuges (beispielsweise einer Schweißelektrode) können sie nicht an allen Stellen eingesetzt werden, die für das eigentliche Werkzeug noch zugänglich sind. In der blechverarbeitenden Industrie kommt es sehr häufig vor, daß Schweißpunkt gerade an Flanschen gesetzt werden die nur zur Verbindung mit einem anderen Blechteil dienen und aus Gewichtsersparnisgründen sehr schmal sind. Ihre Breite entspricht etwa dem Durchmesser der Schweißelektrode. An solchen Stellen können die bekannten Vorrichtungen nicht eingesetzt werden.

Der Erfindung liegt die Aufgabe zugrunde, eine gattungsgemäße Vorrichtung so auszubilden, daß sie besonders kostengünstig herstellbar und auch an beengten und stark gekrümmten Fläche zuverlässig einsetzbar ist.

Die Aufgabe wird durch die kennzeichnenden Merkmale des Anspruchs 1 gelöst.

Im Gegensatz zu der bekannten Lösung ist die vorgeschlagene Vorrichtung aus wenigen, einfach herzustellenden maschinenbaulichen Elementen zusammengesetzt. Komplizierte und kostenaufwendige Meß- und Auswerteeinrichtungen werden vermieden. Im wesentlichen besteht die Vorrichtung aus einem Taster mit einer auf das Werkstück aufzusetzenden Auflagefläche, einem sich an den Taster starr anschließenden Übertragungsteil und zwei mit dem Ende des Übertragungsteiles zusammenwirkende Schieber, welche in dem Gehäuse der Vorrichtung aufgenommen sind. Diese Vorrichtung wird beim Einstellvorgang anstelle des eigentlichen Werkzeuges in die Maschine (z.B. Vielpunktschweißvorrichtung, Bolzenschweißvorrichtung, Clinchvorrichtung) eingesetzt. Beim Ansetzen der Vorrichtung an das Werkstück nimmt der schwenkbar im Gehäuse gelagerte Taster eine bestimmte Winkellage relativ zum Gehäuse ein. Diese Winkellage wird über das Übertragungsteil und die mit ihm verbundenen und im Gehäuse gelagerten Schieber angezeigt. Die beiden, im rechten Winkel zueinander angeordneten Schieber sind so ausgeführt, daß dann, wenn sie bündig mit der Außenkontur des Gehäuses verlaufen, eine rechtwinkelig Stellung des Einstellwerkzeuges auf dem Werkstück kennzeichnen. Die Einstellperson muß also den die Einstellvorrichtung aufnehmenden Abschnitt der Maschine so lange anpassen, bis die beiden Schieber eine bündige Lage mit dem Gehäuse einnehmen. Diese Stellung wird dann fixiert, oder bei programmgesteuerten Anlagen die Koordinaten in das Programm übernommen.

Besonders vorteilhaft ist, wenn der Anschluß der Einstellvorrichtung und im wesentlichen die Außenabmessungen der Vorrichtung mit dem nach dem Einstellvorgang einzusetzenden Werkzeug übereinstimmen. Somit ist gewährleistet, daß das Einstellwerkzeug ohne Probleme anstelle des eigentlichen Werkzeuges in der Maschine aufgenommen werden kann. Durch die im wesentlichen gleichen Außenabmessungen ist es möglich, den Einstellvorgang für alle Operationen durchzuführen, welche auch durch das Werkzeug durchführbar sind. Es ist also ohne weiteres erkennbar, ob bestimmte Stellen überhaupt noch mit dem Werkezeug bearbeitbar sind.

Die Unteransprüche 3 bis 6 kennzeichnen vorteilhafte Weiterbildungen der Erfindung.

Ein Ausführungsbeispiel der Erfindung ist in der Zeichnung dargestellt und wird nachfolgend näher beschrieben. Es zeigt

Fig. 1 einen Schnitt durch eine erfindungsgemäße Vorrichtung in Form einer Einstellelektrode,

Fig. 2 den Schnitt II—II aus Fig. 1 und

Fig. 3 den Schnitt III—III aus Fig. 1.

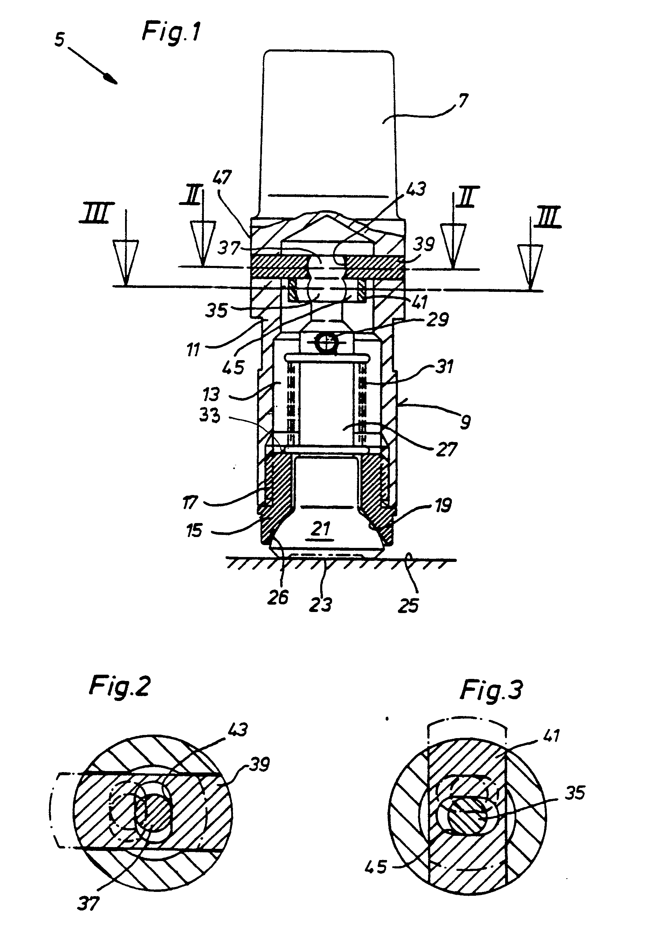

Eine in Fig. 1 dargestellte Einstellelektrode 5 für eine Vielpunktschweißvorrichtung ist in ihren äußeren Abmessungen gleich den Abmessungen einer Schweißelektrode, die nach erfolgtem Einstellvorgang anstelle der Einstellelektrode 5 in die Vielpunkschweißanlage eingesetzt wird. Zu diesem Zweck trägt die Einstellelektrode 5 den gleichen Befestigungskegel 7 wie die (nicht dargestellte) Schweißelektrode.

Der Befestigungskegel 7 ist Bestandteil des Gehäuses 9, welches sich aus einem hohlen ersten Teil 11 und einem den Hohlraum 13 abschließenden zweiten Teil 15 zusammensetzt. Der zweite Teil 15 des Gehäuses 9 ist durch ein Gewinde 17 am ersten Teil 11 befestigt. Besonderes Merkmal des zweiten Teiles 15 ist eine kegelstumpfförmige Öffnung 19, in der ein Taster 21 schwenkbar aufgenommen ist. Der Taster berührt mit seiner Auflagfläche 23 ein nur andeutungsweise dargestelltes Werkstück 25. Ein sich an die Auflagefläche nach oben hin anschließender Bereich des Tasters 21 ist als Kugelabschnitt 26 ausgeführt, welcher mit der kegelstumpfförmigen Öffnung 19 des zweiten Teiles 15 des Gehäuses 9 in Form eines Gelenkes zusammenwirkt. An den Kugelabschnitt 26 des Tasters 21 schließt sich ein Übertragungsteil 27 an. Dieses Übertragungsteil nimmt einen Stift 29 auf, an dem sich eine Druckfeder 31 abstützt. Das andere Ende der Druckfeder 31 liegt an der inneren Stirnfläche des zweiten Teiles 15 an. Die Druckfeder 31 sorgt dafür, daß der Kugelabschnitt 26 des Tasters 21 stets unter einer gewissen Kraft an der kegelstumpfförmigen Öffnung 19 des zweiten Teiles 15 anliegt.

Wie aus Fig. 1 unmittelbar ersichtlich, trägt das freie Ende des Übertragungsteiles 27 Abschnitte 35 und 37, die in Schiebern 39 und 41 aufgenommen sind. Die Schieber 39 und 41 sind im rechten Winkel zueinander angeordnet und im ersten Teil 11 des Gehäuses 9 verschiebbar ausgenommen. Jeder Schieber ist mit einem senkrecht zu seiner Längserstreckung versehenen Schlitz 43 bzw. 45 versehen, in dem der zugeordnete Abschnitt 35 bzw. des Übertragungsteiles 27 gleiten kann.

In Fig. 1 ist eine Stellung der Einstellelektrode 5 dargestellt, in der sich eine umlaufende Bezugsfläche 47 am ersten Teil 11 des Gehäuses 9 genau im rechten Winkel zur Auflagefläche 23 des Tasters 21—und demnach zur Oberfläche des Werkstükkes 25—befindet. Wird nun die Einstellelektrode in einem vom rechten Winkel abweichenden Winkel auf das Werkstück 25 aufgesetzt, dann hat dies zur Folge, daß nur das Gehäuse 9 den abweichenden Winkel aufweist, während das in ihm aufgenommen Übertragungsteil 27—bedingt durch die plane Anlage der Auflagefläche 23—senkrecht zur Oberfläche des Werkstückes 25 steht. Demzufolge treten die äußeren Endflächen der Schieber 39 und 41 (im Sonderfall nur eine Schieber) gegenüber der Bezugsfläche 47 hervor bzw. zurück.

Die Bedienperson muß den die Einstellelektrode 5 tragenden Abschnitt der Maschine so verstellen, bis die äußeren Endflächen der Elektroden 39 und 41 bündig zur Bezugsfläche 47 verlaufen. Nach erfolgter Einstellung wird die Einstellelektrode 5 über einen am Gehäuse 9 angeformten Sechskant 49 gelöst und an ihrer Stelle die Scheißelektrode eingesetzt.

## Patentansprüche

1. Vorrichtung zum Einstellen von in Maschinen angeordneten Werkzeugen im rechten Winkel zu einem zu bearbeitenden Werkstück gekennzeichnet durch folgende Merkmale:

   a) in einem Gehäuse (9) ist ein Taster (21) mit einer Auflagefläche (23) zum Aufsetzen auf das Werkstück (25) schwenkbar gelagert,

   b) an den der Auflagefläche (23) gegenüberliegenden Bereich des Tasters (21) schließt sich ein Übertragungsteil (27) starr an,

   c) durch das freie Ende des Übertragungsteiles (27) sind zwei übereinander im rechten Winkel angeordnete und im Gehäuse (9) längsverschieblich geführte Schieber (39, 41) bewegbar,

   d) jeder Schieber (39, 41) ist mit einem quer zu seiner Längserstreckung angeordneten Schlitz (43, 45) versehen, dessen Breite nur geringfügig größer ist als der in ihm aufgenommen Abschnitt (35, 37) des Übertragungsteiles (27),

   e) die Endflächen der Schieber (39, 41) reichen bis zu Bezugsflächen (47) am Außenumfang des Gehäuses (9), wenn die Bezugsflächen (47) einen rechten Winkel zur Auflagefläche (23) einnehmen,

   f) das Hervor- bzw. Zurücktreten der Endflächen der Schieber (39, 41) gegenüber den Bezugsflächen (47) kennzeichnet eine vom rechten Winkel abweichende Stellung der Vorrichtung (5) auf dem Werkstück (25).

2. Vorrichtung nach Anspruch 1, dadurch gekennzeichnet, daß der Anschluß (7) und im wesentlichen die Außenabmessungen der Vorrichtung (5) mit dem nach dem Einstellvorgang einzusetzenden Werzeug übereinstimmen.

3. Vorrichtung nach Anspruch 1 oder 2, dadurch gekennzeichnet, daß der Taster (21) auf seiner dem Gehäuse (9) zugewandten Seite mit einer Gleitfläche versehen ist und die Gleitfläche unter Einwirkung der Kraft einer Feder (31) an eine Gegenfläche (19) am Gehäuse (15) gedrückt wird.

4. Vorrichtung nach Anspruch 3, dadurch gekennzeichnet, daß die Gleitfläche als Kugelabschnitt ausgebildet ist.

5. Vorrichtung nach Anspruch 3 oder 4, dadurch gekennzeichnet, daß das Gehäuse (9) aus einem hohlen ersten Teil (11) und einem den Hohlraum (13) abschließenden, die Gleitfläche aufweisenden zweiten Teil (15) zusammengesetzt ist, und daß im Bereich des Hohlraums (13) das Übertragungsteil (27) eine Anlage (29) für die Feder (31) aufweist, welche sich an ihrem anderen Ende an der ihr gegenüberliegenden inneren Stirnfläche (33) des zweiten Teiles (15) abstützt.

6. Vorrichtung nach einem der Ansprüche 1 bis 5, dadurch gekennzeichnet, daß die von den Schlitzen (43, 45) der Schieber (39, 41) umschlossenen Abschnitte (35, 37) des Übertragungsteiles (27) als Kugelabschnitte ausgebildet sind.

**Revendications**

1. Dispositif pour positionner à angle droit par rapport à une pièce à usiner des outils montés dans des machines, caractérisé par les caractéristiques suivantes:

a) un palpeur (21) comportant une surface portante (23) destiné à être posée sur la pièce à usiner (25) est monté orientable dans un carter (9),

un élément de transmission (27) est raccordé rigidement à la région du palpeur (21) située à l'opposé de la surface portante (23),

c) deux curseurs (39, 41) disposés à angle droit l'un au-dessus de l'autre et guides longitudinalement dans le carter (9) peuvent être déplacés sur l'extrémité libre de l'élément de transmission (27),

d) chaque curseur (39, 41) comporte un trou oblong (43, 45) qui s'étend transversalement par rapport à sa longueur et dont la largeur n'est que légèrement supérieure à la partie (35, 37) de l'élément de transmission (27) qui y est reçue,

e) les surfaces d'extrémité des curseurs (39, 41) vont jusqu'à des surfaces de référence (47) sur la périphérie extérieure du carter (9) lorsque les surfaces de référence (47) sont à angle droit par rapport à la surface portant (23),

f) la saillie ou le retrait des surfaces d'extrémité des curseurs (39, 41) par rapport aux surfaces de référence (47) caractérisé une position du dispositif (5) sur la pièce à usiner (25) qui s'écarte de l'angel droit.

2. Dispositif selon la revendication 1, caractérisé en ce que le raccord (7) et, dans l'essentiel, les dimensions extérieures du dispositif (5) concordent avec ceux de l'outil qui doit être mis en place après l'opération de positionnement.

3. Dispositif selon la revendication 1 ou 2, caractérisé en ce que le palpeur (21) est muni d'une surface de glissement du côté dirigé vers le carter (9) et en ce que la surface de glissement est pressée sur une contre-surface (19) prévue sur le carter (15) sous l'action de la force d'un ressort (31).

4. Dispositif selon la revendication 3, caractérisé en ce que la surface de glissement est réalisée sous forme de zone sphérique.

5. Dispositif selon la revendication 3 ou 4, caractérisé en ce que le carter (9) se compose d'une première partie creuse (11) et d'une seconde partie (15) qui ferme la cavité (13) et qui comporte la contre-surface, et en ce que dans la région de la cavité (13), l'élément de transmission (27) présente un appui (29) pour le ressort (31) qui prend appui, par son autre extrémité, sur la surface frontale intérieure (33) de la seconde partie (15) qui lui fait face.

6. Dispositif selon l'une quelconque des revendications 1 à 5, caractérisé en ce que les parties (35, 37) de l'élément de transmission (27) qui sont entourées par les trous oblongs (43, 45) des curseurs (39, 41) sont réalisées sous forme de zones sphériques.

**Claims**

1. Device for setting tools, arranged in machines, at a right angle to a workpiece to be worked, characterized by the following features:

a) a probe (21) having a bearing surface (23) for placing onto the workpiece (25) is pivotably mounted in a housing (9),

b) a transmission part (27) rigidly adjoins the area of the probe (21) located opposite the bearing surface (23),

c) two slides (39, 41) arranged one above the other at a right angle and guided in a longitudinally displaceable manner in the housing (9) can be moved by the free end of the transmission part (27),

d) each slide (39, 41) is provided with a slot (43, 45) which is arranged transversely to its longitudinal extent and whose width is only slightly larger than the section (34, 37) of the transmission part (27) accommodated in it,

e) the end surfaces of the slides (39, 41) extent up to reference surfaces (47) at the outer periphery of the housing (9) when the reference surfaces (47) assume a right angle relative to the bearing surface (23),

f) the protruding or receding of the end surfaces of the slides (39, 41) relative to the reference surfaces (47) identify a position of the device (5) on the workpiece (25) deviating from a right angle.

2. Device according to Claim 1, characterized in that the connection (7) and essentially the outer dimensions of the device (5) correspond to the tool to be used after the setting operation.

3. Device according to Claim 1 or 2, characterized in that the probe (21) is provided with a sliding surface on its side facing the housing (9), and the sliding surface is pressed against a mating surface (19) on the housing (15) under the action of the force of a spring (31).

4. Device according to Claim 3, characterized in that the sliding surface is designed as a spherical section.

5. Device according to Claim 3 or 4, characterized in that the housing (9) is composed of a hollow first part (11) and a second part (15) which closes off the hollow space (13) and has the sliding surface, and in that, in the area of the hollow space (13), the transmission part (27) has an abutment (29) for the spring (31), which is supported at its other end of the inner end face (33), opposite it, of the second part (15).

6. Device according to any of Claims 1 to 5, characterized in that the sections (35, 37) of the transmission part (27) which are surrounded by the slots (43, 45) of the slides (39, 41) are designed as spherical sections.

Fig.1

Fig.2

Fig.3